# EUROPEAN PATENT SPECIFICATION

(11) **EP 1 205 707 B1**
(45) Date of publication and mention of the grant of the patent: **12.12.2007**
(21) Application number: 01309075.8
(22) Date of filing: 25.10.2001
(51) Int. Cl.: F23G 7/06

(54) **Removal of fluorine-containing substances from gas streams**
Entsorgung fluorhaltiger Substanzen aus Gasströmen
Elimination des substances contenant du fluor provenant d'écoulements gazeux

(30) Priority: 01.11.2000 GB 0026697
(43) Date of publication of application: 15.05.2002
(73) Proprietor: Edwards Limited, Crawley, West Sussex RH10 9LW (GB)
(72) Inventor: Seeley, Andrew James, Bristol BS1 4RH (GB)
(74) Representative: Booth, Andrew Steven

(56) References cited:
- EP-A- 0 802 370
- DE-A- 2 824 946
- US-A- 3 232 713
- US-A- 4 481 889
- US-A- 5 310 334
- US-A- 5 527 984
- US-A- 5 609 104
- US-A- 5 957 678

## Description

This invention relates to the removal of fluorine-containing substances from gas streams, in particular the removal of very stable fluorocarbons from gas streams emanating from semi-conductor processing chambers by means of combustion.

Many substances used in semi-conductor device manufacturing, and which are extracted from a chamber in which such manufacturing takes place, are toxic and/or environmentally harmful and must therefore be scrubbed from the exhaust gas stream before its release in to the atmosphere.

A number of different types of wet or dry chemical scrubbing reactors have been proposed and numerous are commercially employed in the semi-conductor industry.

For example, in our Patent Specification No. WO 89/11905 there is disclosed a dry chemical reactor sold by our BOC Edwards Division comprising a heated packed tube of granular substances through which the exhaust stream is directed including in particular a first stage of silicon (with an optional addition of copper when the exhaust stream contains nitrogen trifluoride in particular) and a second stage of calcium oxide commonly in the form of lime. Such a reactor has met with considerable commercial success for the scrubbing of such toxic substances.

It is also known from European Patent Specification No 694 735 in the name of Alzeta Corporation, and our prior European Patent Specification No. 0 802 370 that noxious substances of the type in question can be removed from exhaust streams by combustion.
There is described in these prior specifications processes for the combustive destruction of noxious substances which comprises injecting an exhaust gas and added fuel gas in to a combustion zone that is laterally surrounded by the exit surface of a foraminous gas burner, simultaneously supplying fuel gas and air to the burner to effect combustion at the exit surface, the amount of the fuel gas supplied to the foraminous gas burner being on a BTU basis, greater than that of the added fuel gas, and the amount of the air being in excess of the stoichiometric requirement of all the combustibles entering the combustion zone, and discharging the remitting combustion product stream from the combustion zone.

A central feature of the earlier of these prior combustive process is the critical need to supply the fuel gas admixed with the exhaust gas stream in to the combustion zone of the burner. Such premixing of the fuel gas and exhaust gas stream allows for a much greater and efficient scrubbing of the perfluorocarbon hexafluoroethane (C₂F₆). However, there remain certain problems associated with the scrubbing of the even more stable perfluorocarbon, tetrafluoromethane (CF₄).

A great advantage of the prior combustive scrubbing process described above is that it inherently limits the maximum temperature that can be attained in the combustion chamber and thereby suppress the formation of NOₓ gas by-products that may otherwise be formed.

However, in the later of these prior processes, it was found that an addition of oxygen to the exhaust gas stream prior to the introduction of the gas stream in to a foraminous gas burner generally allows for a more efficient combustion of perfluorocarbon gases including tetrafluoromethane (CF₄) in particular.

It is known that stable perfluorocarbons and other stable global warming compounds such as nitrogen trifluoride (NF₃) and sulphur hexafluoride (SF₆) can be destroyed in combustion type abatement systems described in these prior specifications. The underlying principle of the approach in these prior specifications is to form a premixed flame from a mixture of the process gas to be abated (substantially nitrogen but containing a low percentage by volume of the perfluoro compound), oxygen and a hydrocarbon fuel. The fuel and oxygen are added separately and in such a manner as to prevent intermixing except immediately prior to their introduction into the combustion chamber in order to minimise any possibility of flashing back. This is preferentially achieved by premixing either the fuel or the oxygen with the process exhaust gas and adding the other component via a lance mounted concentrically within the nozzle through which the gases enter the combustion chamber. The combustion chamber itself is formed from the exit surface of a foraminous gas burner. This provides (by means of the surface combustion) the necessary thermal and chemical environment to support the combustion of the perfluoro compounds within the previously mentioned premixed flame.

For the abatement of less stable compounds such as hydrides, acid halides, etc, abatement systems employing in part electrically heated chambers of metallic construction operating at moderate temperatures (500°C to 800°C) have commonly been employed. The destruction of perfluoro compounds in an apparatus of this type has been demonstrated by the co-addition of fuel and oxygen to the reaction chamber along with the process exhaust gas. A substantially increased operating temperature (about 1000°C) has proven necessary to provide acceptable destruction rates. However, the drawbacks of this approach include the production of large quantities of nitrogen oxides (NO_{X}) as well as reduced component lifetime as a result of the prolonged operation at elevated temperatures within a very corrosive environment.

The invention is concerned with the provision of a new combustive process and apparatus which allow for the destruction of perfluoro compounds and other compounds at temperatures substantially below those previously repeated and with negligible production of NO_{X}.

In accordance with the invention, there is provided a process for the combustive destruction of a fluorine-containing substance in a gas stream which comprises introducing separately oxygen and hydrogen to the gas stream, and is characterised by heating a substantially cylindrical metal chamber by electrical means placed around the chamber, injecting the oxygen and hydrogen enriched gas stream into the chamber through a nozzle to cause the enriched gas stream to ignite and produce from the nozzle a flame extending into the chamber for destroying the fluorine-containing substance in the gas stream, wherein the amount of oxygen and hydrogen introduced to the gas stream is sufficient to cause substantially complete combustion of the fluorine-containing substance.

In preferred embodiments, the process of the invention provides for the combustive destruction of fluorine-containing substances in a gas stream which comprises one or more nozzles (generally one for each process exhaust stream) through which the stream (or streams) discharges in to a heated combustion chamber.

Preferably the chamber comprises a heated metal tube, for example copper or stainless steel. Heating of the chamber is effected by electrical means, i.e. an electrical resistance heater or heaters being placed around the chamber with means being provided to insulate the external surfaces of the chamber.

It is important that both the fuel gas and the oxygen are introduced in to the gas stream prior to the stream being injected in to the chamber. The resultant flammable mixture is caused to ignite, generally resulting in a substantially attached premixed flame which is adjacent to (or "anchored" to) the end of the nozzle or nozzles. This provides for the destruction of the perfluorocarbon gases present within the combusting mixture. The background temperature of the combustion chamber provides both the initial source of ignition and the means to minimise radiative heat loss from the extremities of the flame, hence maximising destruction efficiency for a given fuel input.

The structure of the inlet nozzles is advantageously designed as to give a mean forward gas velocity sufficient to prevent the back migration of a flame up the nozzle, but not so high as to cause the flame to lift off the end of the nozzle. This is typically achieved by causing the forward gas velocity to be between two and five times the characteristic burning velocity for the pre-mixed concentrations of fuel, oxygen and diluent gas. The efficiencies possible with a construction of this arrangement are in marked contrast to those typically observed where the separate reactive components are caused to intermix and subsequently burn unsupported within a heated combustion chamber.

Preferably the oxygen is introduced in to the gas stream by way of an oxygen lance. Preferably a nozzle or nozzles of such a lance are positioned to introduce the oxygen in to the gas stream substantially immediately prior to the point of injection of the gas stream in to the heated chamber.

With regard to the fuel gas, this can be added to the gas stream at any convenient point prior to the entry of the gas stream in to the heated chamber. However, for reasons of flammability in particular, both the oxygen and the fuel gas should not be present together for any appreciable time prior to their co-injection in to the heated chamber. Overall, it is advantageous for the fuel gas to be injected in to the gas stream upstream of the point of injection of the oxygen.

The resulting gas mixture is injected in to the heated chamber and contains a fuel gas and oxygen (or air). Advantageously, the mixture should have a 10% to 150% stoichiometric excess of oxygen over the fuel gas, more advantageously from 80% to 150%.

Hydrogen, which is generally not a suitable fuel for a porous ceramic burner has been found to be suitable for use as an inject fuel in the manner described previously and is readily available. Furthermore, the hydrogen and oxygen inject are preferably only required when the perfluorocarbons gas is present and to be abated. Gas streams not containing perfluorocarbon do not necessarily require such an inject.

The source of hydrogen may be the pure or substantially pure gas or may be a hydrogen mixture such as "water gas" or "synthesis gas" formed from the interaction of steam with carbonaceous materials at elevated temperatures and having a typical composition of 45% H₂, 45% CO by volume, balance N₂, CO₂, CH₄. Alternatively, a mixture of hydrogen and nitrogen can be employed, for example 75% H₂, balance substantially nitrogen (by volume).

The amount of hydrogen itself present in the process is preferably at least the stoichiometric amount (by volume) in respect of the species being combusted. For example, in the case of fluorine compounds, the amount of hydrogen is preferably at least the stoichiometric amount in respect of the free and the co-ordinated fluorine. In the case of fluorine (F₂) itself, at least the same volumes of fluorine and hydrogen (H₂) would be required. In the case of nitrogen trifluoride (NF₃) there would be 1.5 volumes of hydrogen to each volume of NF₃. In the case of the perfluorocarbon hexofluorine ethane (C₂F₆), there would be at least three hydrogen volumes for each C₂F₆ volumes.

The amount of hydrogen present is beneficially at least twice or three times, or even five or ten times, the stoichiometric volume in respect of the species being combusted.

In preferred embodiments, the apparatus in which the process of the invention is conducted can be adapted so that a gas stream emanating from a processing chamber, for example a semi-conductor chamber can be interfaced with a process tool contained in the chamber to monitor and thereby ascertain when perfluorocarbon gases are present in the gas stream leaving the chamber and, normally via a vacuum pump or pumps evacuating the chamber, being urged forward and injected in to the heated chamber of the apparatus for conducting the invention. This monitoring can lead to a substantially reduced usage of fuel gas and oxygen, and consequential reduction in cost, as the inject of these gases can be turned off when no perfluorocarbon gases are present.

In accordance with the invention, the generation of the gas stream/oxygen/fuel gas mixture within the thermal environment provided by heated reactor can lead to the destruction of perfluoro compounds at temperatures generally substantially below those previously disclosed and with negligible production of NO_{X}. This is particularly useful in situations where there is no readily available source of gaseous hydrocarbon fuel. The thermal environment should preferably be provided electrically.

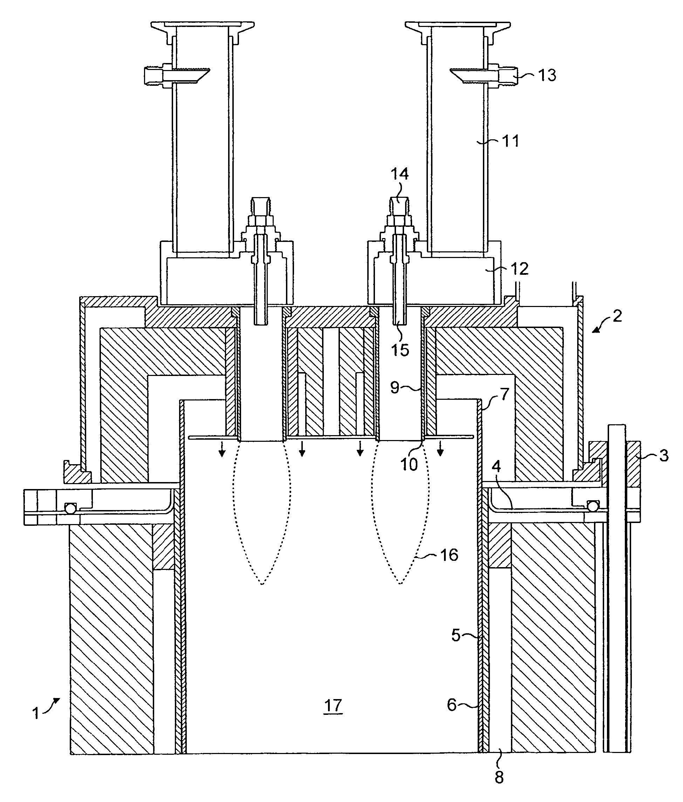

For a better understanding of the invention, reference will now be made, by way of exemplification only, to the accompanying drawing which shows a schematic representation of apparatus for conducting the process of the invention.

With reference to the drawing, there is shown apparatus of overall cylindrical shape and comprising a lower body portion 1 and an upper body portion 2 secured (and sealed) to each other by fixing means 3.

Centrally held within the lower body portion 1 by means of a spacer ring 4 is a tubular wall member 5 of good thermal conductivity. A reaction chamber 6 of cylindrical shape and made of copper or stainless steel is provided and sized such that it fits closely with the wall member 5 and an upper end 7 thereof extends from within the wall member 5 and into the interior of the upper body portion 2.

An electrical resistance heater 8 is present in the annular space between the lower body portion 1 and the wall member 5 and adapted for the efficient heating of the wall member 5 and hence the reaction chamber 6.

Four inlet nozzles 9 (two of which are shown in the drawing with the other two hidden behind) are securely held (and sealed) in the upper body portion 2, the lower ends 10 of which extend into the confines of the upper end 7 of the reaction chamber 6.

Four process gas inlet tubes 11 are present and are linked to their respective inlet nozzle 9 via one of four intermediate chambers 12 to form four sealed passageways between the respective inlet tubes 11 and the inlet nozzles 9.

Towards the top of each inlet tube 11 is an oxygen inject port 13 extending substantially to the centre line of the tube 11.

A fuel gas injection port 14 is present in each intermediate chamber 12 with a lance 15 extending through the chamber 12 and into the top area of the inlet nozzle 9.

In use of the apparatus, an exhaust gas stream from for example, a semi-conductor processing chamber is urged for example, by means of a vacuum pump system in one of the inlet tubes 11 and is thereafter injected in to the confines of the reaction chamber 6. Oxygen (or air) is introduced into the gas stream as it passes through the tube 11 by means of the inject port 13 and fuel gas is introduced in to the oxygen-containing gas stream as it passes through the inlet nozzle 9 by means of the lance 15.

One or more of the inlet tubes may be connected to gas streams emanating from one or more process chamber as appropriate.

In use the reaction chamber 6 is heated by means of the heater 8 to produce the desired temperature within and across the chamber. The presence of the oxygen and the fuel gas will generally cause a flame 16 to appear at the end 10 of the inlet nozzle 9 as indicated by the dotted lines within the chamber 6.

Supplementary scrubbing means including a wet scrubber may be attached to the exit 17 of the reaction chamber 6.

In process tests conducted in the apparatus in accordance with the invention, one of the four inlet tubes 11 was connected to the exhaust of a vacuum pump from a semiconductor processing chamber. The pump was equipped with facilities to monitor the flow rates of perfluorocarbon compounds and to vary the total nitrogen flow. Injections of hydrogen fuel gas and oxygen were introduced as indicated.

The other three inlet tubes 11 were each connected to a source of nitrogen at 50 sl/min to simulate the exhaust flows from three other vacuum pumps. The reaction chamber was heated to a tube temperature of 750°C.

The results are shown in Table 1.

**TABLE I**

| Test # | N₂ I/min | H₂ I/min | O₂ I/min | PFC | I/min | % Destruction |
|---|---|---|---|---|---|---|
| 1 | 37 | 10 | 5 | C₂F₆ | 1.2 | 82 |
| 2 | 27 | 10 | 5 | C₂F₆ | 1.2 | 92 |
| 3 | 27 | 10 | 4 | C₂F₆ | 1.2 | 92 |
| 4 | 27 | 10 | 3 | C₂F₆ | 1.2 | 88 |
| 5 | 50 | 10 | 5 | SF₆ | 1.3 | 62 |
| 6 | 40 | 10 | 5 | SF₆ | 1.3 | 72 |
| 7 | 35 | 10 | 5 | SF₆ | 1.3 | 77 |
| 8 | 27 | 10 | 5 | SF₆ | 1.3 | 82 |

In these results, the NO_{X} emissions were 3 to 6 ppm maximum.

When using nitrogen trifluoride plasmas in semiconductor processing, especially those generated in remote plasma sources, high levels of fluorine gas can be produced.

Further process tests were conducted in a apparatus shown in the drawing again with the reactor chamber (internal) temperature of 750°C. The quantification of the nitrogen trifluoride was carried out using a "VG" mass spectrometer.

The flows of hydrogen, oxygen and reactive gases (NF₃, F₂) were controlled using a Tylan mass flow controllers. Nitrogen purge flows were measured using rotameters.

The results are shown in Table II

**TABLE II**

| NF₃ flow sl/min | Pump Nitrogen⁰ sl/min | Oxygen flow sl/min | Hydrogen Flow Sl/min | NF₂ + Signal | Exhaust Oxygen (%) | Exhaust NO (ppm) | Exhaust NO₂ (ppm) | %NF₃ destroyed |
|---|---|---|---|---|---|---|---|---|
| 0.48 | 45 | 5 | 10 | 1.48E-10 | | | | 95.6% |
| 0.48 | 45 | 0 | 10 | 1.10E-10 | | | | 96.7% |
| 0.48 | 45 | 0 | 20 | 1.76E-11 | | | | 99.5% |
| 0.48 | 45 | 10 | 20 | 2.35E-12 | 7 | 1811 | 103 | 99.9% |
| 0.48 | 45 | 5 | 20 | 1.53E-12 | 4.8 | 890 | 23 | 100.0% |
| 0.48 | 45 | 4 | 20 | 1.73E-1 | 4.4 | 385 | 14 | 99.9% |
| 0.48 | 45 | 3 | 20 | 8.56E-13 | 4 | 47 | 14 | 100.0% |
| 0.48 | 45 | 3.5 | 20 | 1.36E-12 | 4.2 | 127 | 15 | 100.0% |
| 0.48 | 45 | 2.5 | 20 | 7.39E-12 | 3.9 | 17 | 13 | 99.8% |
| 0.48 | 45 | 0 | 0 | 3.38E-09 | | | | 0.0% |

| | | | | | | | | |
|---|---|---|---|---|---|---|---|---|
| ⁰ at a first inlet tube 11. (50 sl/min N₂ provided to each of the other three inlets). | | | | | | | | |

More tests were carried out in a similar manner during which the level of, and abatement of, fluorine was measured. The fluorine was measured using Dräger tubes.

The results are shown in table III

**TABLE III**

| NF₃ flow sl/min | Pump Purge sl/min | Fluorine flow sl/min | Oxygen flow sl/min | Hydrogen flow sl/min | NF₂+ signal | Fluorine ppm | % NF₃ destroyed |
|---|---|---|---|---|---|---|---|
| 1 | 35 | 0 | 0 | 0 | 6.28E-09 | | 0.00% |
| 1 | 45 | 1 | 4 | 9 | 2.05E-10 | ~ 1 ppm | 96.73% |
| 1 | 35 | 1 | 4 | 9 | 7.48E-11 | ~ 1 ppm | 98.81% |
| 1 | 35 | 1 | 4 | 13.3 | 6.29E-12 | ~ 1 ppm | 99.90% |

These tests show good destruction of nitrogen trifluoride and fluorine with reasonable quantities of hydrogen being required.

## Claims

1. A process for the combustive destruction of a fluorine-containing substance in a gas stream which comprises introducing separately oxygen and hydrogen to the gas stream, and is **characterised by** heating a substantially cylindrical metal chamber by electrical means placed around the chamber, injecting the oxygen and hydrogen enriched gas stream into the chamber through a nozzle to cause the enriched gas stream to ignite and produce from the nozzle a flame extending into the chamber for destroying the fluorine-containing substance in the gas stream, wherein the amount of oxygen and hydrogen introduced to the gas stream is sufficient to cause substantially complete combustion of the fluorine-containing substance.

2. A process according to Claim 1, wherein the enriched gas stream has a 10 to 150% stoichiometric excess of oxygen over the fuel gas.

3. A process according to Claim 2, wherein the enriched gas stream has an 80 to 150% stoichiometric excess of oxygen over the fuel gas.

4. A process according to any preceding claim, wherein the hydrogen is present in at least the stoichiometric amount by volume in respect of the fluorine-containing substances being combusted.

5. A process according to Claim 4, wherein the hydrogen is present in at least twice the stoichiometric amount by volume in respect of the fluorine-containing substances being combusted.

6. A process according to Claim 4 or Claim 5, wherein the hydrogen is present in at least five times the stoichiometric amount by volume in respect of the fluorine-containing substances being combusted.

7. A process according to any preceding claim, wherein the fluorine-containing substance is a perfluoro compound.

8. A process according to Claim 7, wherein the perfluoro compound is one of CF₄, C₂F₆, F₂, NF₃ and SF₆.

9. A process according to any preceding claim, wherein the gas stream is from a semi-conductor process chamber.

10. A process according to any preceding claim, wherein the gas stream is monitored for the presence of fluorine containing substances.

11. A process according to Claim 10, wherein the flow of hydrogen and oxygen into the gas stream is turned off when no fluorine-containing substances are present in the gas stream.

12. A process according to any preceding claims, wherein the forward velocity of the gas leaving the nozzle is between two and five times the characteristic burning velocity of the hydrogen and oxygen enriched gas stream.

13. A process according to any preceding claim, wherein the oxygen is introduced to the gas stream by way of a lance.

14. A process according to Claim 13, wherein the lance is positioned substantially immediately prior to the point of injection of the gas stream into the heated metal chamber.

15. A process according to any preceding claim, wherein the hydrogen is added to the gas stream upstream of the point of injection of the oxygen.

## Patentansprüche

1. Verfahren zur verbrennenden Zerstörung einer Fluor enthaltenden Substanz in einem Gasstrom, welches das separate Einleiten von Sauerstoff und Wasserstoff in dem Gasstrom umfasst, und **gekennzeichnet ist durch** Erhitzen einer im wesentlichen zylindrischen Metallkammer **durch** um die Kammer herum angeordnete elektrische Mittel, Einleiten des mit Sauerstoff und Wasserstoff angereicherten Gasstroms in die Kammer durch eine Düse, um das Zünden des angereicherten Gasstroms und das Erzeugen einer in die Kammer hineinverlaufenden Flamme von der Düse aus zum Zerstören der Fluor enthaltenden Substanz in dem Gasstrom zu erzeugen, wobei die in den Gasstrom eingeleitete Menge von Sauerstoff und Wasserstoff ausreichend ist, um eine im wesentlichen vollständige Verbrennung der Fluor enthaltenden Substanz zu bewirken.

2. Verfahren nach Anspruch 1, wobei der angereicherte Gasstrom einen stöchiometrischen Überschuß von 10 bis 150% von Sauerstoff gegenüber dem Brennstoffgas hat.

3. Verfahren nach Anspruch 2, wobei der angereicherte Gasstrom einen stöchiometrischen Überschuß von 80 bis 150% an Sauerstoff gegenüber dem Brennstoffgas hat.

4. Verfahren nach einem der vorhergehenden Ansprüche, wobei der Wasserstoff mindestens in der stöchiometrischen Menge nach Volumen mit Bezug auf die zu verbrennenden Fluor enthaltenden Substanzen vorhanden ist.

5. Verfahren nach Anspruch 4, wobei der Wasserstoff in mindestens zwei Mal der stöchiometrischen Menge nach Volumen mit Bezug auf die zu verbrennden Fluor enthaltenden Substanzen vorhanden ist.

6. Verfahren nach Anspruch 4 oder 5, wobei der Wasserstoff in mindestens fünf Mal der stöchiometrischen Menge nach Volumen mit Bezug auf die zu verbrennenden Fluor enthaltenden Substanzen vorhanden ist.

7. Verfahren nach einem der vorhergehenden Ansprüche, wobei die Fluor enthaltende Substanz eine Perfluorverbindung ist.

8. Verfahren nach Anspruch 7, wobei die Perfluorverbindung CF₄, C₂F₆, F₂, NF₃ und SF₆ ist.

9. Verfahren nach einem der vorhergehenden Ansprüche, wobei der Gasstrom aus einer Halbleiterprozesskammer kommt.

10. Verfahren nach einem der vorhergehenden Ansprüche, wobei der Gasstrom bezüglich der Anwesenheit von Fluor enthaltenden Substanzen überwacht wird.

11. Verfahren nach Anspruch 10, wobei die Strömung von Wasserstoff und Sauerstoff in den Gasstrom abgeschaltet wird, wenn keine Fluor enthaltenden Substanzen in dem Gasstrom vorhanden sind.

12. Verfahren nach einem der vorhergehenden Ansprüche, wobei die Vorwärtsgeschwindigkeit des die Düse verlassenden Gases zwischen dem Zwei- und dem Fünffachen der charakteristischen Brenngeschwindigkeit des mit Wasserstoff und Sauerstoff angereicherten Gasstroms beträgt.

13. Verfahren nach einem der vorhergehenden Ansprüche, wobei der Sauerstoff mittels einer Lanze in den Gasstrom eingeleitet wird.

14. Verfahren nach Anspruch 13, wobei die Lanze im wesentlichen unmittelbar vor der Einleitungsstelle des Gasstroms in die erwärmte Metallkammer positioniert ist.

15. Verfahren nach einem der vorhergehenden Ansprüche, wobei der Wasserstoff stromauf der Einleitungsstelle des Sauerstoffs in den Gasstrom zugegeben wird.

## Revendications

1. Procédé pour la destruction par combustion d'une substance contenant du fluor dans un courant gazeux, qui comprend l'introduction séparée d'oxygène et d'hydrogène dans le courant gazeux, et qui est ***caractérisé par*** le chauffage d'une chambre en métal sensiblement cylindrique par des moyens électriques placés autour de la chambre, l'injection dans la chambre du courant gazeux enrichi en oxygène et en hydrogène par l'intermédiaire d'une tuyère pour faire s'enflammer le courant gazeux enrichi et produire, depuis la tuyère, une flamme se projetant dans la chambre afin de détruire la substance contenant du fluor dans le courant gazeux, dans lequel la quantité d'oxygène et d'hydrogène introduite dans le courant gazeux est suffisante pour provoquer une combustion sensiblement totale de la substance contenant du fluor.

2. Procédé selon la revendication 1, dans lequel le courant gazeux enrichi présente un excès stoechiométrique de 10 à 150 % d'oxygène par rapport au gaz combustible.

3. Procédé selon la revendication 2, dans lequel le courant gazeux enrichi présente un excès stoechiométrique de 80 à 150 % d'oxygène par rapport au gaz combustible.

4. Procédé selon l'une quelconque des revendications précédentes, dans lequel l'hydrogène est présent selon au moins la quantité stoechiométrique en volume par rapport aux substances contenant du fluor soumises à la combustion.

5. Procédé selon la revendication 4, dans lequel l'hydrogène est présent selon au moins deux fois la quantité stoechiométrique en volume par rapport aux substances contenant du fluor soumises à la combustion.

6. Procédé selon la revendication 4 ou la revendication 5, dans lequel l'hydrogène est présent selon au moins cinq fois la quantité stoechiométrique en volume par rapport aux substances contenant du fluor soumises à la combustion.

7. Procédé selon l'une quelconque des revendications précédentes, dans lequel la substance contenant du fluor est un composé perfluoré.

8. Procédé selon la revendication 7, dans lequel le composé perfluoré est l'un d'entre CF₄, C₂F₆, F₂, NF₃ et SF₆.

9. Procédé selon l'une quelconque des revendications précédentes, dans lequel le courant gazeux provient d'une chambre de traitement de semi-conducteurs.

10. Procédé selon l'une quelconque des revendications précédentes, dans lequel le courant gazeux est contrôlé afin d'y déceler la présence de substances contenant du fluor.

11. Procédé selon la revendication 10, dans lequel il est mis fin à l'écoulement d'hydrogène et d'oxygène dans le courant gazeux lorsqu'aucune substance contenant du fluor n'est présente dans le courant gazeux.

12. Procédé selon l'une quelconque des revendications précédentes, dans lequel la vitesse de projection vers l'avant du gaz quittant la tuyère est comprise entre deux et cinq fois la vitesse de combustion caractéristique du courant de gaz enrichi en hydrogène et en oxygène.

13. Procédé selon l'une quelconque des revendications précédentes, dans lequel l'oxygène est introduit dans le courant gazeux au moyen d'une lance.

14. Procédé selon la revendication 13, dans lequel la lance est placée sensiblement juste avant le point d'injection du courant gazeux dans la chambre métallique chauffée.

15. Procédé selon l'une quelconque des revendications précédentes, dans lequel l'hydrogène est ajouté au courant gazeux en amont du point d'injection de l'oxygène.
